Europäisches Patentamt

European Patent Office

Office européen des brevets

(19)

(11) Publication number: **0 018 456**
**B1**

(12) **EUROPEAN PATENT SPECIFICATION**

(45) Date of publication of patent specification: **29.06.83**

(51) Int. Cl.³: **F 16 G 5/20, B 29 H 7/22**

(21) Application number: **79300766.7**

(22) Date of filing: **04.05.79**

(54) Self-adjusting V-belt and method of manufacturing the same.

(43) Date of publication of application:
**12.11.80 Bulletin 80/23**

(45) Publication of the grant of the patent:
**29.06.83 Bulletin 83/26**

(84) Designated Contracting States:
**CH DE FR GB IT NL SE**

(56) References cited:
**EP - A - 0 005 076**
**FR - A - 2 350 515**
**US - A - 2 211 202**
**US - A - 2 430 500**
**US - A - 3 078 206**
**US - A - 3 250 653**
**US - A - 3 464 875**
**US - A - 3 473 989**
**US - A - 3 584 516**
**US - A - 3 800 610**
**US - A - 3 830 113**
**US - A - 3 839 116**
**US - A - 3 872 735**
**US - A - 4 002 082**
**US - A - 4 106 966**

(73) Proprietor: **MITSUBOSHI BELTING LTD.**
**No. 1-21, Hamazoedori 4-Chome Nagata-ku**
**Kobe-shi Hyogo (JP)**

(72) Inventor: **Takano, Hiroshi**
**No.2-543, Higashi Jiyugoaka**
**Shijimi-cho Miki-shi Hyogo (JP)**

(74) Representative: **Cooper, Derek Robert et al,**
**Marks & Clerk Alpha Tower Suffolk Street**
**Queensway**
**Birmingham B1 1TT (GB)**

Courier Press, Leamington Spa, England.

# 0018456

## Self-adjusting V-belt and method of manufacturing the same

This invention relates to self-adjusting V-belts, that is V-belts which automatically compensate for any elongation which tends to occur during service caused by friction-generated heat. The invention also relates to a method of manufacturing such V-belts.

Wrapping connector driving belts (such as flat belts, V-belts and poly-V-belts) serve, in general, to transmit power between pulleys or the like through frictional force, and therefore the belt needs to be pretensioned according to the operating conditions. If the belt becomes elongated and its tension is decreased during operation, then the gripping force of the belt on the pulleys or the like is decreased, as a result of which the belt slips. Such slipping of the belt causes heat to be generated therein resulting in the belt becoming further elongated while the degree of slip of the belt is also further increased. The heat thus generated may also result in the belt being broken earlier than its normal service life. Accordingly, in order to improve the durability of the belt, it should become elongated to a negligible extent during operation so that a tension can be maintained which is higher than a threshold value at which slipping occurs.

U.S. Patent No. 2 430 500 discloses a V-belt which attempts to overcome this problem by minimising the elongation which results from thermal stress. More particularly, the V-belt comprises an outer tension section and an inner compression section which are each provided with transverse ridges on a surface thereof remote from the other section. A canvas covering is provided on the ridged surface of the tension section, and elongate tensile portions are embedded in the belt and extend longitudinally thereof in laterally spaced, mutually parallel relation. In this construction, undue elongation of the belt under thermal stress is prevented by forming the elongate tensile portions of braided wire so that they are high in strength and have a small extensibility. However, a small amount of elongation can still take place and even this may be sufficient to cause the belt to slip with a consequential loss in efficiency. Because braided wires are employed in the formation of the elongate tensile portions, the belt is made rather stiff and its longitudinal flexibility is therefore poor, making the belt unsuitable for use with small diameter pulleys. This flexibility problem is compounded by the fact that the braided wires are located generally centrally of the belt, which also has the effect of lowering the pitch line so that the contact area between the sides of the belt and the side walls of the pulley grooves is decreased: accordingly, the power transmission efficiency is reduced.

Recently, a technical concept has been studied in which an elongate member having high thermal contraction stress is used to form the tensile portions of the belt, so that when heat is generated in the belt the tensile portions react quickly to contract the belt and thereby suppress elongation thereof. A suitable material for this purpose is a synthetic fibre rope made of, for instance, polyester fibre. Belts of this type are normally manufactured *inter alia* by forming the tensile portions by spirally winding an elongate tensile member around a cylindrical drum or metal mould and over a rubber layer which is subsequently to be vulcanized. During manufacture of the belt, thermal elongation treatment of the tensile member is extensively carried out in order to reduce the elongation of the tensile member before actual moulding of the belt. However, as the degree of thermal elongation treatment is increased, the thermal contraction stress of the tensile member produced during vulcanization is also increased. Accordingly, during the vulcanization operation the tensile member contracts radially of the belt and passes through or "drops" in the rubber layer, as a result of which the contraction stress of the tensile member becomes lessened. The resultant belt is therefore high in elongation At worst, the tensile member is disturbed within the rubber layer and it is difficult to maintain equal spacing between the windings of the tensile member.

The above-described difficulties will now be explained in greater detail with reference to Figures 1 to 5 of the accompanying drawings, in which:—

Figure 1 illustrates a first conventional method of manufacturing a belt of the type described above;

Figure 2 is a section through a belt manufactured by the method of Figure 1;

Figure 3 is a section through an alternative form of belt of the type described above;

Figure 4 illustrates a second conventional method of manufacturing a belt of the type described above; and

Figure 5 is a section through a belt manufactured by the method of Figure 4.

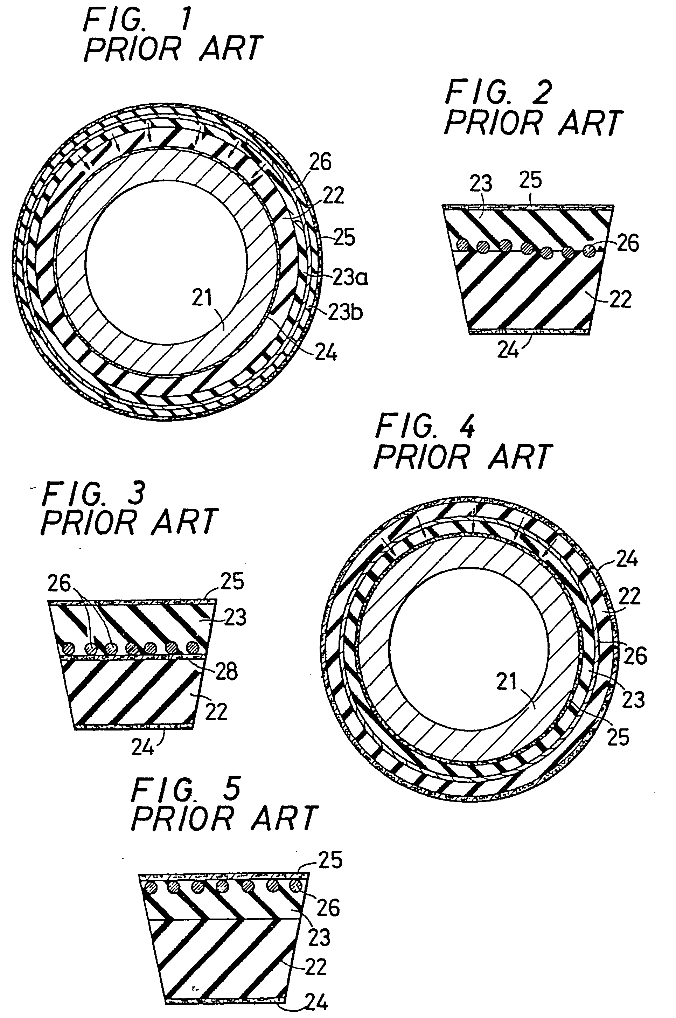

Referring first to Figure 1, in the first conventional manufacturing method, a few plys of rubberized canvas 24 are wound around a cylindrical metal mould 21. An unvulcanized compressive rubber sheet 22 is laminated onto the rubberized canvas 24, and an unvulcanized adhesion rubber sheet 23a is in turn laminated onto the compressive rubber sheet 22. Then, an elongate tensile member 26 made of polyester fibres and having a large thermal contraction stress is wound spirally around the adhesion rubber sheet 23a. Thereafter, a further unvulcanized adhesion rubber sheet 23b and a canvas covering comprising several plys of rubberized canvas 25 are wound in succession over the tensile member 26 to form a belt blank. The belt blank is then externally pressurized and heated so as to cause *inter alia* melting of the adhesion rubber sheets 23a and 23b. The resultant structure after cooling is cut into a plurality of rings to produce respective V-belts.

In this method of manufacture, the tensile member 26 is embedded between the adhesion rubber sheets 23b and 23a as the latter flow under the application of heat and pressure. However, the amount of rubber flowing between the windings of the tensile member is very small, and the degree of friction obtained by the flow of rubber is therefore also small. It is thus difficult to activate the surface of the tensile member 26. Also, since various blending chemicals and softeners are mixed in the adhesion rubber sheets 23b and 23a before vulcanization, chemicals lowering the adhesion properties thereof are activated. As a result, the adhesion properties of the surfaces of the adhesion rubber layers 23a and 23b are unsatisfactory. This factor, taken in combination with the tensile member 26 having an inert surface means that is difficult to bond the tensile member 26 to the adhesion rubber.

Furthermore, the tensile member 26 is wound around the adhesion rubber sheet 23a, and contracts during vulcanization. This causes the tensile member 26 to contract radially or "drop" through the adhesion rubber sheet 23a, as indicated by arrows in Figure 1, and possibly also partially through the compressive rubber sheet 22. Thus, as shown in Figure 2, the arrangement of the windings of the tensile member 26, i.e. the pitch line thereof, becomes irregular. Accordingly, during operation of the belt, tension is non-uniformly applied to the windings of the tensile member 26, which may cause the belt to fail prematurely.

In order to eliminate the "dropping" of the tensile member caused by its thermal contraction, a method may be employed in which, as shown in Figure 3, a reinforcing canvas layer 28 is provided between the compressive and adhesion rubber sheets to prevent the tensile member 26 from dropping into the compressive rubber sheet 22. In this case, however, the tensile member 26 still "drops" to the radially inner part of the adhesion rubber and comes into contact with the reinforcing canvas 28. Therefore, the reinforcing canvas may separate the belt into layers.

Figure 4 illustrates a so-called reversal method of belt manufacture, in which a canvas covering in the form of a rubberized canvas 25, an adhesion rubber sheet 23, a tensile member 26, a compressive rubber sheet 22 and a further rubberized canvas 24 are wound in succession onto a metal mould 21 to form a belt blank. The belt blank is then pressurized and heated *inter alia* to melt the adhesion rubber, and the resultant structure after cooling is cut into a plurality of rings. These rings are turned inside out to produce respective V-belts. In this manufacturing method, it is again difficult to prevent the tensile member from "dropping" through the adhesion rubber in the manner indicated by arrows. As a result of the tensile member 26 comes into contact with the rubberized canvas 25, as shown in Figure 5. The problems described above in relation to Figures 1 to 3 may thus also be caused with respect to the surface where the tensile member is provided.

In the conventional manufacturing methods described above in relation to Figures 3 to 5, substantially no volume of rubber remains between the tensile member and the reinforcing canvas or the rubberized canvas in the finished belt, i.e. the tensile member is in direct contact with the canvas, and therefore the adhesion properties of the tensile member are lowered. This may result in the tensile member peeling off during operation of the belt. Thus, the conventional manufacturing methods described above are still disadvantageous in many respects.

The present invention seeks to obviate or mitigate all of the above-described difficulties.

According to a first aspect of the present invention, there is provided a self-adjusting V-belt comprising a compressive rubber layer, an adhesion rubber layer laminated onto the compressive rubber layer, a surface of each layer remote from the other layer having respective transversely extending ridges thereon with said surface of the compressive rubber layer forming an inner surface of the V-belt in use, a canvas covering disposed over said surface of the adhesion rubber layer, and elongate tensile portions having a large thermal contracting stress extending longitudinally of the V-belt in substantially mutually parallel, equi-spaced relation, characterised in that the elongate tensile portions are embedded between the adhesion rubber layer and the ridges thereon and contact portions of the canvas covering which are disposed in grooves between the ridges.

Because the elongate tensile portions have a large thermal contracting stress, they automatically contract when the V-belt becomes heated by the friction generated in service. Consequently, the V-belt is prevented from becoming elongated under the effect of such heating and is maintained substantially at a constant tension. Moreover, because the elongate tensile portions are in partial contact with the canvas covering on the adhesion rubber layer, the V-belt of the invention has excellent flexibility, which is particularly advantageous where a tension pulley is employed in the drive transmission system and contacts the outer surface of the belt. Furthermore, since the elongate tensile portions are disposed in an outer region of the belt, a large contact area can be obtained between the side surfaces of the belt and the sides of a pulley groove which the belt engages in use.

In order to improve the ease with which the ridges on the compressive rubber layer can be extracted from the pulley grooves, these ridges can be covered by at least one ply of rubberized canvas which is bonded thereto. By choosing the rubberized canvas such that it has a low coefficient of friction, a comparatively large degree of slip can be obtained between the canvas and the pulley, with the consequential avoidance of stress contraction in the inner part of the belt when disposed in the pulley groove.

Where the ridges on the compressive rubber layer are provided at regular intervals along the V-belt, there is a tendency for squeaking noise which occurs when each ridge is pulled out of the pulley groove to be compounded, resulting in comparatively noisy operation. This problem can be avoided by providing the ridges at random intervals along the V-belt, so that the squeaking noise occurs randomly and the timing of the generation of the noise is consequentially dispersed.

As described above, conventional methods of manufacturing V-belts comprise generally the steps of: forming a belt blank between two generally co-axial cylindrical mould surfaces by winding in a suitable order around an inner one of the mould surfaces an adhesion rubber sheet, a compressive rubber sheet and an elongate tensile member, the latter being wound spirally around the inner mould surface, and pressurising and heating the belt blank to bond together the component parts thereof. An example of such a method is disclosed in US Patent No. 4,106,966, wherein both the inner and outer mould surfaces are toothed and, during the pressurising and heating operation, the rubber in the adhesion rubber sheet and the compressive rubber sheet flows into gaps between these teeth to form transverse ridges on both the inner and outer surfaces of the finshed belt. However, where the elongate tensile member has been subjected to thermal elongation treatment, as described previously it is possible for the member to drop (i.e. contract radially the mould) during the heating and pressurising operation.

According to a second aspect of the present invention, there is provided a method of manufacturing a self-adjusting V-belt as defined in the fifth last preceding paragraph, comprising the steps of: forming a belt blank by wrapping in succession around a toothed outer wall of a cylindrical mould an adhesion rubber sheet, a spirally wound elongate tensile member and a compressive rubber sheet; placing over the belt blank a hollow cylindrical mould having a toothed inner wall; heating and pressurising the belt blank to bond together the component parts thereof and cause parts of the adhesion and compressive rubber sheets to flow respectively into gaps between the teeth on the mould walls and thereby form said ridges in the finished belt; characterised in that, prior to said wrapping of the adhesion rubber sheet, a canvas covering is wrapped around the outer wall of the cylindrical mould and the elongate tensile member is wound directly onto the canvas covering so that it is in contact with portions of the canvas covering which are supported by the teeth on said wall, the canvas covering being stretchable circumferentially of the cylindrical mould so as to permit said part of the adhesion rubber sheet during the heating and pressurising operation to flow between the windings of the tensile member and expand the canvas covering into the gaps between said teeth.

Embodiments of the present invention will now be described by way of example, with reference to the remainder of the accompanying drawings in which:—

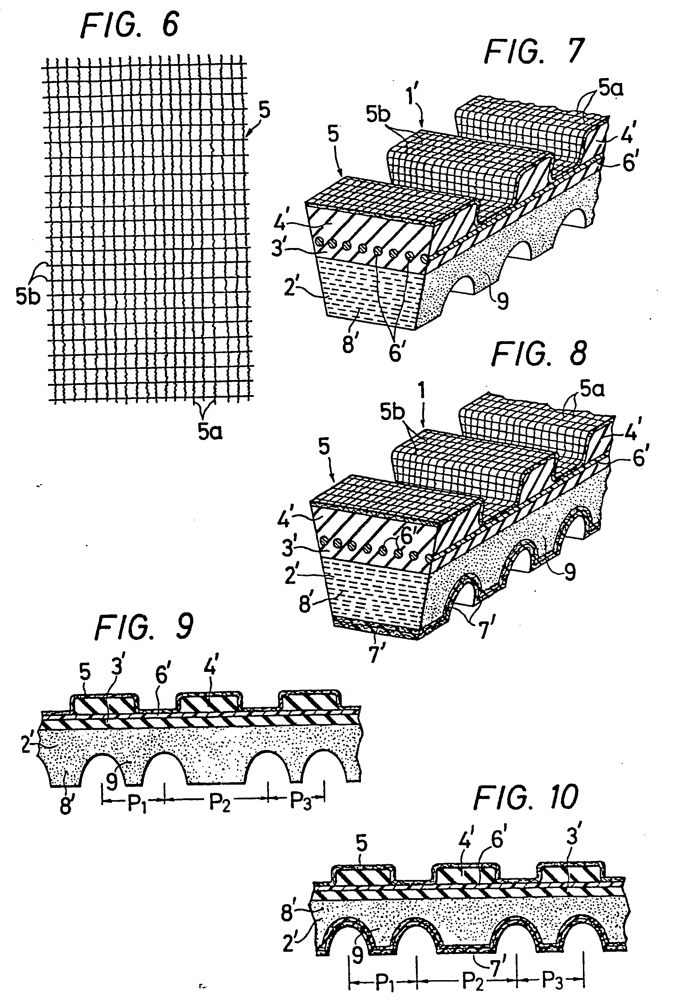

Figure 6 is a plan view of a canvas covering which forms part of the V-belts shown in Figures 7 and 8;

Fig. 7 is a perspective view of a section of a V-belt according to a first embodiment of the present invention;

Fig. 8 is a perspective view of a section of a V-belt according to a second embodiment of the present invention;

Fig. 9 is a schematic side view of a modified form of the V-belt shown in Fig. 7;

Fig. 10 is a schematic side view of a modified form of the V-belt shown in Fig. 8;

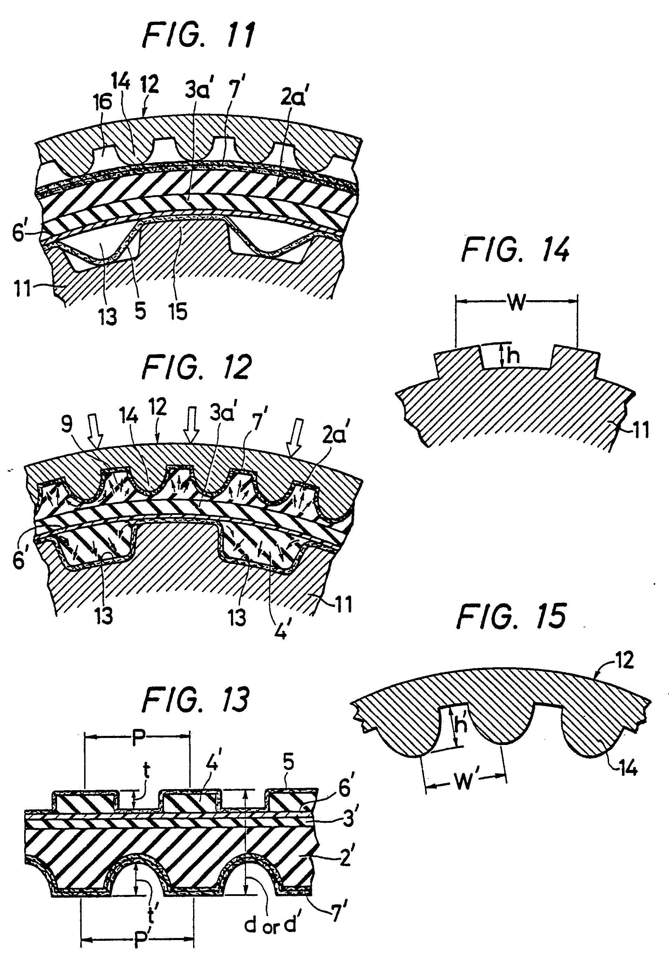

Fig. 11 illustrates generally one stage in a method of manufacturing the V-belt shown in Fig. 8;

Fig. 12 illustrates generally a subsequent stage in the method of manufacturing the V-belt shown in Fig. 8;

Fig. 13 is a schematic side view of the section of V-belt shown in Fig. 8;

Fig. 14 is a sectional view of a part of an inner cylindrical mould which is used in the manufacture of the V-belt; and

Fig. 15 is a sectional view of part of an outer cylindrical mould which is also used in the manufacture of the V-belt.

Referring first to Fig. 7, the V-belt shown therein is designated generally by reference numeral 1' and comprises a compressive rubber layer 2' having an adhesion rubber layer 3' laminated thereon. The adhesion rubber layer 3' has a Shore hardness of 60° to 80°, and is made of the same material as the compressive rubber layer 2'. The rubber layers 2' and 3' are made of a heatproof synthetic rubber, such as polychloroprene rubber (CR), nitrile butadiene rubber (BNR) or a blend of these two rubbers, or a coldproof rubber such as a blend of natural rubber (NR) and styrene butadiene rubber (SBR) or a blend of polychloroprene rubber (CR) and butyl rubber (BR). The coldproof rubber would normally be used at temperatures of −30°C to −40°C, for example, where there is a danger that a heatproof synthetic rubber would harden and deteriorate to an extent which renders the belt unusable.

A surface of the adhesion rubber layer 3' remote from the compressive rubber layer 2' (which forms an outer surface of the V-belt) is provided with a series of cogs or ridges 4' thereon which extend transversely of the direction of extent of the belt 1'. The ridges 4' are provided at regular intervals *p* along the length of the belt, and are of equal height *t* (see Fig. 13). A canvas 5 covers the ridges 4' and the recesses therebetween, and is arranged to be stretchable (i.e. expandable and contractable) only in the direction of extent of the belt 1'. The canvas 5 is made frictional with a heatproof synthetic rubber or a coldproof rubber similar to those described above in relation to the layers 2' and 3'.

A series of elongate tensile portions 6' are embedded between the adhesion rubber layer 3' and the ridges 4' so that they contact portions of the canvas 5 which are disposed in the recesses between the ridges 4'. As will be explained later, the tensile portions 6' are formed from a single spirally-wound tensile member, and extend longitudinally of the belt 1' in parallel, equi-spaced relation. More particular, when the belt 1' adopts its natural (i.e. undeformed) configuration, the tensile portions 6' are regularly arranged on a common imaginary cylindrical surface.

A surface of the compressive rubber layer 2' remote from the adhesion rubber layer 3' (which forms the inner surface of the V-belt) is provided with a series of further cogs or ridges 9 thereon which also extend transversely of the direction of extent of the belt. In the embodiment shown in Fig. 7, the ridges 9 are provided at equal intervals *p'* along the belt 1', and are of equal height *t'* (see Fig. 13).

In order to improve the side pressure durability and wear-resistance of the belt, short fibres 8' are embedded in the compressive rubber layer 2' and are oriented transversely of the direction of extent of the belt 1'. The fibres 8' are obtained by cutting natural fibres (such as cotton threads), synthetic fibres (such as nylon, tetron, vinylon and rayon) or non-organic fibres (such as glass fibres) into lengths of 5 mm to 10 mm. Preferably, the fibres are present in the compressive rubber layer in a proportion of 10% to 30% by weight (i.e. 10 to 30 parts by weight of short fibres to 100 parts by weight of rubber).

The construction of the above-described V-belt will now be explained in greater detail. As mentioned above, the ridges 4' on the outer surface of the belt are provided at a separation or pitch *p* and are each of height *t*. The values of *p* and *t* are related to the overall thickness *d* of the belt 1' as follows:—

$$1.5t < p < 3.5t \qquad \text{(A)}$$
$$0.12d < t < 0.4d \qquad \text{(B)}$$

With reference to relation (A), if the value of *p* is made less than the lower limit of 1.5t, then the top parts of the ridges 4' will be of elongated configuration, as a result of which the lateral rigidity of the belt will be reduced and the ridges may be broken and scattered during operation of the belt. If, on the other hand, the vaue of *p* is made greater than the upper limit of 3.5t, then the tensile member 6' will assume a polygonal section when wound upon a mould during the manufacture of the belt. This will cause the pitch line of the belt to pulsate on the pulley or the like during operation, resulting in vibration of the belt and the generation of heat.

With reference to relation (B), if the value of *t* is made less than the lower limit of 0.12d, then the height of the ridges will be reduced so much that their reinforcement effect will be decreased, resulting in a reduction in the service life of the belt. Furthermore, the belt itself will become curved or deformed laterally when located in a groove of the pulley or the like, as a result of which stress will be concentrated in the windings of the tensile member 6' adjacent the sides of the belt, which will also decrease the service life of the belt. If, on the other hand, the value of *t* is made greater than the upper limit of 0.4d, then the pitch line of the tensile member 6' will necessarily be lowered. Hence, the number of effective tensile portions and the effective power transmitting area will be reduced, thus decreasing the power transmitting force of the belt.

As mentioned above, the canvas 5 is arranged to be stretchable only in the direction of extent of the belt. One example of such a canvas is shown in Fig. 6, and is obtained by weaving curled nylon warps 5a which have been subjected to wooly treatment and ordinary nylon wefts 5b. The warps 5a, which are stretchable, are oriented longitudinally of the belt so that the latter can bend sufficiently in the longitudinal direction, while the ordinary nylon wefts 5b contribute to giving the belt widthwise rigidity.

The tensile member 6' is made of polyester fibres or polyamide fibres 0.6 to 2.5 mm in diameter, and its surface is subjected to adhesion treatment with an isocyanate group liquid or resorcin-formalin latex (RFL) liquid, the tensile member then being heat set at 200°C. As a result, the tensile member 6' has a thermal contraction stress of 0 g/denier at room temperature (20°C) and at least 3.5 g/denier at 100°C, i.e. the difference between its thermal contraction stress at 100°C and that at 20°C is $\Delta^E 100 - 20 \geqslant 3.5$ g/denier. If $\Delta^E 100 - 20$ were to be made less than 3.5 g/denier, then the tensile member would not be able to react sufficiently to the generation of heat during operation to prevent elongation and consequential slipping of the belt.

As described above, the ridges 9 on the inner surface of the belt are provided at a separation or pitch *p'* and are of height *t'*. The values of *p'* and *t'* are related to the overall thickness *d* of the belt as follows:—

$$1.5t' < p' < 3.5t' \qquad \text{(C)}$$
$$0.25d < t' < 0.5d \qquad \text{(D)}$$

With reference to relation (C), if the value of $p'$ is made less than the lower limit of 1.5t', then the configuration of the ridges 9 necessarily becomes small. As a result, the side pressure durability of the belt during operation is reduced. On the other hand, if the value of $p'$ is made greater than the upper limit of 3.5t', then the belt is liable to become of polygonal section when bent on a pulley, which may result in cracking of the ridges 9.

With reference to relation (D), the value of $t'$ should be greater than the lower limit of 0.25d in order to increase the bending resistance. If, however, the value of $t'$ is made greater than the upper limit of 0.5d, then the bending resistance with respect to the pulley is reduced, and the side pressure durability of the belt is decreased.

With a V-belt constructed as described above in relation to Fig. 7, various problems can be solved, such as those relating to the contraction stress which occurs when heat is generated in the belt, the elasticity of the inner and outer surfaces of the belt, and the bending resistance, side pressure durability and wear-resistance of the belt. More particularly, by providing the ridges 9 on the inner surface of the belt, the bendability of the latter is increased as compared to a V-belt having no such ridges. The belt can therefore be used with pulleys of comparatively small diameter, so that the transmission system formed by the pulleys and the V-belt can be made compact in design. The V-belt illustrated in Fig. 7 does however have certain disadvantages.

As the belt moves around a pulley, it is difficult to pull the ridges 9 out of the pulley groove. Because the ridges 9 must therefore be forcibly removed from the pulley groove, the belt produces a periodic squeaking noise. As the coefficient of friction between the ridges 9 and the pulley is increased, it becomes more difficult to extract the ridges from the pulley groove, and consequently the amount of squeaking noise is increased. Such squeaking is repeated cyclically during operation of the belt, as a result of which the squeaking noise can become disturbing. In addition, although an automobile can advantageously use pulleys of comparatively small diameter, this is not the case for larger vehicles such as buses and trucks.

In order to solve the noise-generation problem described above, the entire inner surface of the V-belt, i.e. the ridges 9 and the recesses therebetween, can be covered with one or more plys of rubberized canvas 7', as illustrated in Fig. 8. Preferably, two to five plys are used. The rubberized canvas 7' can be a bias canvas made of cotton threads, or can be laminated from plys of canvas which are stretchable in one direction only (i.e. the direction of extent of the belt). In one particular example, the canvas 7' is of similar construction to the canvas 5 shown in Fig. 6, and comprises curled nylon warps (corresponding to the warps 5a) which extend longitudinally of the belt and ordinary nylon wefts (corresponding to the wefts 5b) which extend transversely of the belt.

Because of the comparatively low coefficient of friction of the rubberized canvas 7', the ridges 9 can be readily pulled out of the pulley groove and the amount of slipping of the belt is reduced, thereby decreasing the squeaking noise generated during operation. Moreover, since the degree of slip between the canvas 7' and the pulley is great, concentration of stress can be avoided in the inner part of the belt when disposed in the pulley groove, thereby protecting the belt from becoming cracked.

In the V-belts shown in Figs. 7 and 8, the ridges 9 are provided at equal intervals therealong, i.e. their pitch $p'$ is constant. The squeaking noise is therefore generated at regular intervals as the ridges 9 are pulled successively out of the pulley groove, thereby compounding the effects of this noise. Even when the ridges 9 are covered by rubberized canvas, as in the embodiment of Fig. 8, a certain amount of squeaking noise still occurs, and therefore the compounding of this noise still remains a problem.

This problem can be overcome by providing the ridges 9 at irregular intervals along the V-belt, as shown in Figs. 9 and 10. Fig. 9 shows the case where the ridges 9 are not covered by rubberized canvas (as in Fig. 7), and Fig. 10 shows the case where a layer of rubberized canvas 7' is provided (as in Fig. 8). In each of these Figures, the separation between successive adjacent pairs of ridges 9 are denoted respectively by $p_1$, $p_2$ and $p_3$, the values of these separations being different from each other. Each of these separation values, however, satisfies relation (C) above in order to preserve the side pressure durability and bending characteristics of the belt. Preferably, $p_1$, $p_2$ and $p_3$ are all in the range of from 5 mm to 10 mm. By providing the ridges 9 at irregular intervals, they are pressed non-uniformly into the pulley groove during operation of the belt. As a result, the belt squeaks randomly or intermittently as the ridges 9 are pulled out of the pulley groove, so that the timing of the noise generation is dispersed.

It will be manifest from the above that the greatest reduction in noise generation will be achieved if the ridges 9 are covered by rubberized canvas and are also provided at irregular intervals along the belt. This is the case for the V-belt shown in Fig. 10.

In each of the above-described V-belts according to the present invention, the rubber layers 2' and 3' are made of CR, NBR, or a CR-NBR blend, which have excellent heat resistance, or are made of an NR-SBR blend or a CR-BR blend in order to protect the belt from hardening and deterioration in cold conditions. Therefore, the V-belts can be most effectively employed in equipment such as automobiles in which heat is frequently generated as a result of the high-speed operation of the belt. Moreover the tensile member 6' is made of a material (such as polyester fibres or polyamide fibres) which has excellent thermal contraction characteristics. Accordingly, the tensile member 6' can immediately contract in response to the heat generated when the belt is run at high speed or is repeatedly bent, or to the heat generated by friction due to the slip of the belt on the pulley. Thus, the tensile member automatically tightens the belt, and therefore it is unnecessary to adjust the tension of the belt manually.

As described above, the series of ridges 4' on the outer surface of the belt improves the bending characteristics of the belt and, although the canvas 5 is bonded to this surface, it does not affect the bending characteristics because it is sufficiently stretchable in the longitudinal direction of the belt. At the same time, the belt also has high transverse rigidity which prevents the belt from being transversely deformed when disposed in the pulley groove. This high transverse rigidity of the belt results from the high transverse rigidity of the canvas 5 (caused by the wefts 5b being made of ordinary nylon threads), the comparatively high hardness of the adhesion rubber layer 3', and the presence of the short fibres 8' which are embedded laterally in the compressive rubber layer 2'. Furthermore, local fatigue of the belt is prevented because the tensile member 6' is embedded therein in such a manner that it only contacts parts of the canvas 5. This also has the effect of preventing the tensile member 6' from peeling off the belt body. Moreover, because the canvas 5 is made frictional with the same type of rubber as is used for the belt body, the adhesion properties of the canvas 5 are improved.

Also as described above, the provision of the further ridges 9 on the inner surface of the belt improves the bending characteristics of the latter still further, thereby enabling the belt to be used with pulleys of comparatively small diameter. The amount of noise generated during operation of the belt can be reduced by covering the ridges 9 with the rubberized canvas 7, as mentioned previously.

A method of manufacturing the above-described belt using a reversal moulding technique will now be explained with reference to Figs. 11 to 15. The method utilizes an inner cylindrical metal mould 11 (only part of which is shown) whose outer wall is provided with a series of circumferentially spaced protrusions 15 thereon which extend axially of the mould. Axially-extending grooves 13 are formed between adjacent protrusions 15. The protrusions 15 are provided at regular intervals $w$ along the circumference of the mould, and are of equal height $h$ (see Fig. 14). The values of $w$ and $h$ are related to the overall thickness $d$ of the finished belt as follows:—

$$1.5h < w < 3.5h$$
$$0.12d < h < 0.4d$$

As will become apparent, the grooves 13 define the ridges 4' in the finished belt and the values of $w$ and $h$ are chosen with the corresponding dimensions $p$ and $t$ in mind.

In the method of belt manufacture, the canvas 5 constructed as described above is subjected to bonding treatment, and is then made frictional with a rubber such as CR or NBR, a heatproof synthetic rubber obtained by blending these rubbers, or a blend rubber such as NR-SBR or CR-BR. The canvas 5 is stretchable in one direction only (i.e. in the direction of extent of the warps 5a), and is wound around the mould 11 in such a manner that the warps 5a extend circumferentially thereof. Normally, the canvas 5 is wound around the mould 11 with slack so that it follows the grooves 13, as shown in Fig. 11. However, where the canvas 5 has high stretchability, it is unnecessary to provide such slack, and the canvas may be wound as shown in Fig. 12.

The tensile member 6' described above is then spirally wound around the canvas 5 with a tension 1.5 to 3.5 times its normal tension (0.2 to 0.6 g/denier), so that a thermal contraction stress will be created therein when heat is generated in the finished belt. Thereafter, an unvulcanized adhesion rubber sheet 3a' (corresponding to the layer 3' in the finished belt) is wound around and bonded to the tensile member 6'. The amount of the adhesion rubber in the sheet 3a' must be sufficient to ensure that the entire lower surface of the tensile member 6' is covered by the adhesion rubber when the ridges 4' are formed. A compressive rubber sheet 2a' (corresponding to the layer 2' in the finished belt) is then wound around the adhesion rubber sheet 3a': since the compressive rubber layer 2' forms a major part of the finished belt, the sheet 2a' is made thicker than the adhesion rubber sheet 3a'. As described above, short fibres are embedded in the compressive rubber sheet 2a' to improve the side pressure durability and wear-resistance of the finished belt. The compressive rubber sheet 2a' is manufactured by mixing the short fibres with the compressive rubber in the proportion mentioned previously, and then subjecting the resultant mixture to sheeting, for example by calendering. Finally, the rubberized canvas 7' (when provided) is wound around the compressive rubber sheet 2a'. As described above, the canvas 7' can comprise two to five plys of rubberized bias cotton canvas made frictional with a rubber of similar quality to that of the adhesion rubber or the compressive rubber, or two to five plys of stretchable rubberized canvas similar to that described above with reference to Fig. 6. A belt blank is thus produced on the inner cylindrical mould 11.

A hollow outer cylindrical mould 12 (only part of which is shown) made of hard rubber is then placed over the belt blank. An inner wall of the mould 12 is provided with a series of circumferentially spaced protrusions 14 thereon which extend axially of the mould and which are of part-circular or wave-shaped cross-section. Axially extending grooves 16 are defined between adjacent ones of the protrusions 14. The protrusions 14 are provided at intervals $w'$ along the circumference of the mould 12, and are each of height $h'$ (see Fig. 15). The values of $w'$ and $h'$ are related to the overall thickness $d$ of the finished belt as follows:—

$$1.5h' < w' < 3.5h'$$
$$0.25d < h' < 0.5d$$

As will become apparent, the grooves 16 define the ridges 9 in the finished belt, and the values of $w'$ and $h'$ are chosen with the corresponding dimensions $p'$ and $t'$ in mind. According to the type of belt to be produced, the protrusions 14 can be provided at either regular or irregular intervals along the circumference of the mould 12.

The resultant assembly is then placed in a vulcanizing furnace into which is introduced steam at a pressure of 7 to 8 Kg/cm² in order to vulcanize the belt blank. During this operation, the mould 12 is heated and pressurized, causing the rubber sheets 2a' and 3a' to become fluidized. On the other hand, the adhesion rubber from the sheet 3a' flows between the windings of the tensile member 6' and into the grooves 13 in the inner mould 11 (as indicated by arrows in Fig. 12), thereby expanding the rubberized canvas 5 and forming the ridges 4'. On the other hand, compression rubber from the sheet 2a' flows into the grooves 16 in the outer mould 12 (as indicated by arrows in Fig. 12), thereby forming the ridges 9. Where the rubberized canvas 7 is provided, it is expanded by this flow of the compressive rubber.

The amount of rubber which flows between the windings of the tensile member 6' is much greater than in the conventional methods illustrated in Figs. 1 to 5. Furthermore, the rubber flows between the tensile member windings in a turbulent state as a kind of mixed rubber. As a result, the contacting surfaces of the adhesion rubber and the tensile member 6' are activated, and the adhesion forces between the tensile member 6', the adhesion rubber and the ridges 4' forming the body of the belt are significantly improved.

After completion of the vulcanization operation, the outer mould 12 is removed, and the resultant moulded belt structure is separated from the inner mould 11 after cooling. The moulded belt structure is then cut in a conventional manner into a plurality of rings of predetermined width, the rings then being turned inside out to form respective V-belts.

In the above-described method of manufacture, the tensile member 6' is wound directly over the canvas 5 so that it is supported by the protrusions 15 against "dropping". As a result, the windings of the tensile member are arranged regularly on a common imaginary cylindrical surface. Accordingly, any heat generated in the belt during operation thereof, for example by frictional slipping, induces thermal contraction in the tensile member 6', thereby contracting the belt itself. The belt is therefore self-adjusting, and it is unnecessary to provide a separate tension pulley or to adjust the spacing between the pulleys around which the belt passes in oder to maintain the belt in proper tension. The service life of the belt can thus be increased.

**Claims**

1. A self-adjusting V-belt comprising a compressive rubber layer (2'), an adhesion rubber layer (3') laminated onto the compressive rubber layer (2'), a surface of each layer (2', 3') remote from the other layer having respective transversely extending ridges (9, 4') thereon with said surface of the compressive rubber layer (2') forming an inner surface of the V-belt in use, a canvas covering (5) disposed over said surface of the adhesion rubber layer (3'), and elongate tensile portions (6') having a large thermal contracting stress extending longitudinally of the V-belt in substantially mutually parallel, equi-spaced relation, characterised in that the elongate tensile portions (6') are embedded between the adhesion rubber layer (3') and the ridges (4') thereon and contact portions of the canvas covering (5) which are disposed in grooves between the ridges (4').

2. A V-belt as claimed in Claim 1, wherein the ridges (4') on the adhesion rubber layer (3') are spaced at intervals $p$ along the V-belt and are each of height $t$, the values of $p$ and $t$ being related to the overall thickness $d$ of the V-belt as follows:—

$$1.5t < p < 3.5t$$
$$0.12d < t < 0.4d.$$

3. A V-belt as claimed in Claim 1 or 2, wherein the elongate tensile portions (6') have a differential thermal contraction stress between 100°C and 20°C of at least 3.5 g/denier.

4. A V-belt as claimed in Claim 1, 2 or 3, wherein the elongate tensile portions (6') are made of polyester or polyamide fibres.

5. A V-belt as claimed in any preceding claim, wherein short fibres (8') are embedded in the compressive rubber layer (2') and are oriented transversely of the V-belt.

6. A V-belt as claimed in Claim 5, wherein the short fibres (8') are present in the compressive rubber layer (2') in an amount of from 10% to 30% by weight.

7. A V-belt as claimed in any preceding claim, wherein the canvas covering (5) is stretchable longitudinally of the V-belt.

8. A V-belt as claimed in Claim 7, wherein the canvas covering (5) is composed of curled nylon warps (5a) which have been subjected to wooly treatment interwoven with ordinary nylon wefts (5b), the warps (5a) extending longitudinally of the V-belt.

9. A V-belt as claimed in any preceding claim, wherein the Shore hardness of the adhesion rubber layer (3') is from 60° to 80°.

10. A V-belt as claimed in any preceding claim, wherein the compressive rubber layer (2') is made of a heatproof rubber or a coldproof rubber.

11. A V-belt as claimed in any preceding claim, wherein the ridges (9) on the compressive rubber layer (2') are provided at intervals $p'$ along the V-belt and are each of height $t'$, the values of $p'$ and $t'$ being related to the overall thickness $d$ of the V-belt as follows:—

$$1.5t' < 3.5t'$$
$$0.25d < t' < 0.5d.$$

12. A V-belt as claimed in any preceding claim, wherein the ridges (9) on the compressive rubber layer (2') are provided at substantially regular intervals along the V-belt.

13. A V-belt as claimed in any one of Claims 1 to 11, wherein the ridges (9) on the compressive rubber layer (2') are provided at random intervals along the V-belt.

14. A V-belt as claimed in any preceding claim, wherein the ridges (9) on the compressive rubber layer (2') are covered by at least one ply of rubberized canvas (7') which is bonded thereto.

15. A V-belt as claimed in Claim 14, wherein the rubberized canvas (7') is a bias canvas.

16. A V-belt as claimed in Claim 14, wherein the rubberized canvas (7') is a stretchable canvas composed of curled nylon warps which have been subjected to wooly treatment interwoven with ordinary nylon wefts.

17. A method of manufacturing a self-adjusting V-belt according to any preceding claim, comprising forming a belt blank by wrapping in succession around a toothed outer wall of a cylindrical mould (11) an adhesion rubber sheet (3a'), a spirally wound elongate tensile member (6') and a compressive rubber sheet (2a'), placing over the belt blank a hollow cylindrical mould (12) having a toothed inner wall, and heating and pressurising the belt blank to bond together the component parts thereof and cause parts of the adhesion and compressive rubber sheets (3a', 2a') to flow respectively into gaps (13, 16) between the teeth (15, 14) on the mould walls and thereby form said ridges (4', 9) in the finished belt, characterised in that, prior to said wrapping of the adhesion rubber sheet (3a'), a canvas covering (5) is wrapped around the outer wall of the cylindrical mould (11) and the elongate tensile member (6') is wound directly onto the canvas covering (5) so that it is in contact with portions of the canvas covering which are supported by the teeth (15) on said wall, the canvas covering (5) being stretchable circumferentially of the cylindrical mould (11) so as to permit said part of the adhesion rubber sheet (3a') during the heating and pressurising operation to flow between the windings of the tensile member (6') and expand the canvas covering (5) into the gaps (13) between said teeth (15).

18. A method as claimed in Claim 17, wherein prior to the pressurizing and heating operation at least one ply of rubberized canvas (7') is wound around the compressive rubber sheet (2a'), the rubberized canvas (7') being stretchable circumferentially of the hollow cylindrical mould (12) so as to permit, during the pressurizing and heating operation, said part of the compressive rubber sheet (2a') to flow into said gaps (16) and thereby expand the rubberized canvas (7').

19. A method as claimed in Claim 17 or 18, wherein the teeth (14) are provided at intervals $w'$ around the circumference of the hollow cylindrical mould (12) and are each of height $h'$, the values of $w'$ and $h'$ being related to the overall thickness $d$ of the finished V-belt as follows:—

$$1.5h' < w' < 3.5h'$$
$$0.25d < h' < 0.5d.$$

20. A method as claimed in Claim 17, 18 or 19, wherein the teeth (15) are provided at intervals $w$ around the circumference of the first-mentioned cylindrical mould (11) and are each of height $h$, the values of $w$ and $h$ being related to the overall thickness $d$ of the finished V-belt as follows:—

$$1.5h < w < 3.5h$$
$$0.12d < h < 0.4d.$$

21. A method as claimed in any one of Claims 17 to 21, wherein the tension of the elongate tensile member (6') after winding is 1.5 to 3.5 times its normal tension which is 0.2 to 0.6 g/denier.

## Revendications

1. Courroie trapézoïdale à ajustement automatique, comprenant und couche (2') de caoutchouc compressif, une couche (3') de caoutchouc d'adhérence collée sur la couche (2') de caoutchouc compressif, une surface de chaque couche (2', 3') éloignée de l'autre couche ayant des nervures transversales (9, 4') à sa surface, la surface de la couche (2') de caoutchouc compressif formant une surface interne de la courroie trapézoïdale lors du fonctionnement, un revêtement (5) de toile disposé sur la surface de la couche (3') de caoutchouc d'adhérence, et des parties allongées de tension (6') ayant une contrainte élevée de contraction thermique et disposées longitudinalement par rapport à la courroie trapézoïdale, en étant sensiblement parallèles les unes aux autres et régulièrement espacées, caractérisée en ce que les parties allongées de tension (6') sont enrobées entre la couche (3') de caoutchouc d'adhérence et les nervures (4') qu'elle porte et des parties de contact du revêtement de toile (5) qui sont disposées dans des gorges formées entre les nervures (4').

2. Courroie trapézoïdale selon la revendication 1, caractérisée en ce que les nervures (4') formées sur la couche (3') de caoutchouc d'adhérence sont séparées à des intervalles p le long de la courroie trapézoïdale et ont chacune une hauteur t, les valeurs de p et t étant reliées à l'épaisseur totale d de la courroie trapézoïdale de la manière suivante:

$$1,5t<p<3,5t$$
$$0,12d<t<0,4d$$

3. Courroie trapézoïdale selon l'une des revendications 1 et 2, caractérisée en ce que les parties allongées de tension (6') ont une contrainte de contraction thermique différentielle, entre 100°C et 20°C, au moins égale à 3,5 g/denier.

4. Courroie trapézoïdale selon l'une quelconque des revendications 1 à 3, caractérisée en ce que les parties allongées de tension (6') sont formées de fibres de polyester ou de polyamide.

5. Courroie trapézoïdale selon l'une quelconque des revendications précédentes, caractérisée en ce que de courtes fibres (8') sont enrobées dans la couche (2') de caoutchouc compressif et sont orientées transversalement à la courroie trapézoïdale.

6. Courroie trapézoïdale selon la revendication 5, caractérisée en ce que les courtes fibres (8') sont présentes dans la couche (2') de caoutchouc compressif en quantité comprise entre 10 et 30 % en poids.

7. Courroie trapézoïdale selon l'une quelconque des revendications précédentes, caractérisée en ce que le revêtement de toile (5) est étirable longitudinalement par rapport à la courroie trapézoïdale.

8. Courroie trapézoïdale selon la revendication 7, caractérisée en ce que le revêtement de toile (5) est composé de fils bouclés de chaîne de "Nylon" (5a) qui ont été soumis à un traitement de lainage, tissés à des fils ordinaires de trame de "Nylon" (5b), les fils de chaîne (5a) étant disposés suivant la longueur de la courroie trapézoïdale.

9. Courroie trapézoïdale selon l'une quelconque des revendications précédentes, caractérisée en ce que la dureté Shore de la couche (3') de caoutchouc d'adhérence est comprise entre 60° et 80°.

10. Courroie trapézoïdale selon l'une quelconque des revendications précédentes, caractérisée en ce que la couche (2') de caoutchouc compressif est formée d'un caoutchouc résistant à la chaleur ou résistant au froid.

11. Courroie trapézoïdale selon l'une quelconque des revendications précédentes, caractérisée en ce que les nervures (9) formées sur la couche (2') de caoutchouc compressif sont disposées à des intervalles p' le long de la courroie trapézoïdale et ont chacune hauteur t', les valeurs de p' et t' étant reliées à l'épaisseur totale d de la courroie trapézoïdale de la manière suivante:

$$1,5t'<p'<3,5t'$$
$$0,25d<t'<0,5d$$

12. Courroie trapézoïdale selon l'une quelconque des revendications précédentes, caractérisée en ce que les nervures (9) formées sur la couche (2') de caoutchouc compressif sont disposées à des intervalles sensiblement réguliers le long de la courroie trapézoïdale.

13. Courroie trapézoïdale selon l'une quelconque des revendications 1 à 11, caractérisée en ce que les nervures (9) formées sur la couche (2') de caoutchouc compressif sont placées à intervalles aléatoires le long de la courroie trapézoïdale.

14. Courroie trapézoïdale selon l'une quelconque des revendications précédentes, caractérisée en ce que les nervures (9) formées sur la couche (2') de caoutchouc compressif sont recouvertes par au moins une couche d'une toile caoutchoutée (7') qui y est collée.

15. Courroie trapézoïdale selon la revendication 14, caractérisée en ce que la toile caoutchoutée (7') est une toile disposée en biais.

16. Courroie trapézoïdale selon la revendication 14, caractérisée en ce que la toile caoutchoutée (7') est une toile étirable composée de fils bouclés de chaîne de "Nylon" qui ont été soumis à un traitement de lainage et tissés à des fils ordinaires de trame de "Nylon".

17. Procédé de fabrication d'une courroie trapézoïdale à ajustement automatique selon l'une quelconque des revendications précédentes, comprenant la formation d'une ébauche de courroie par enroulement successif autour d'une paroi externe d'un moule cylindrique (11) ayant des dents, d'une feuille (3a') de caoutchouc d'adhérence, d'un organe allongé de tension (6') enroulé en spirale et d'une feuille (2a') de caoutchouc compressif, la disposition sur l'ébauche de courroie d'un moule cylindrique creux (12) ayant une paroi interne munie de dents, et le chauffage et la mise sous pression de l'ébauche de courroie afin que les parties constituantes de celle-ci soient collées les unes aux autres et que des parties des feuilles (3a', 2a') d'adhérence et de caoutchouc compressif fluent dans les espaces (13, 16) formés entre les dents (15, 14) des parois des moules et forment ainsi les nervures (4', 9) de la courroie terminée, caractérisé en ce que, avant enroulement de la feuille (3a') de caoutchouc d'adhérence, un revêtement de toile (5) est enroulé autour de la paroi externe du moule cylindrique (11), et l'organe allongé de tension (6') est enroulé directement sur le revêtement de toile (5) afin qu'il soit au contact de parties du revêtement de toile (5) afin qu'il soit au contact de parties du revêtement de toile qui sont supportées par les dents (15) sur ladite paroi, le revêtement de toile (5) étant étirable suivant la circonférence du moule cylindrique (11) afin que ladite partie de la feuille (3a') de caoutchouc d'adhérence puisse fluer pendant l'opération de chauffage et de mise sous pression entre les enroulements de l'organe de tension (6') et repousse le revêtement de toile (5) dans les espaces (13) séparant les dents (15).

18. Procédé selon la revendication 17, caractérisé en ce que, avant l'opération de mise sous pression et de chauffage, une couche au moins de toile caoutchoutée (7') est enroulée autour de la feuille (2a') de caoutchouc compressif, la toile caoutchoutée (7') étant étirable suivant la circonférence du moule cylindrique creux (12) afin que, pendant l'opération de mise sous pression et de chauffage, ladite partie de la feuille (2a') de caoutchouc compressif puisse s'écouler dans les espaces (16) et puisse ainsi repousser la toile caoutchoutée (7').

19. Procédé selon l'une des revendications 17 et 18, caractérisé en ce que les dents (14) sont disposées à des intervalles w' autour de la circonférence du moule cylindrique creux (12) et ont chacune une hauteur h'; les valeurs de w' et h' étant reliées à l'épaisseur totale d de la courroie trapézoïdale terminée de la manière suivante:

$$1,5h'<w'<3,5h'$$
$$0,25d<h'<0,5d$$

20. Procédé selon l'une quelconque des revendications 17 à 19, caractérisé en ce que les dents (15) sont placées à des intervalles w autour de la circonférence du premier moule cylindrique (11) et ont chacune une hauteur h, les valeurs de w et h étant reliées à l'épaisseur totale d de la courroie trapézoïdale terminée de la manière suivante:

$$1,5h<w<3,5h$$
$$0,12d<h<0,4d$$

21. Procédé selon l'une quelconque des revendications 17 à 20, caractérisé en ce que la tension de l'organe allongé de tension (6') après enroulement, est de 1,5 à 3,5 fois sa tension normale qui est de 0,2 à 0,6 g/denier.

## Patentansprüche

1. Selbsteinstellender Keilriemen mit einer Kompressions-Gummischicht (2'), einer der Kompressions-Gummischicht (2') aufliegenden Haft-Gummischicht (3'), wobei auf einer der anderen Schicht abgewandten Oberfläche jeder Schicht (2', 3') jeweils quer verlaufende Rippen (9, 4') angeordnet sind und die Oberfläche der Kompressions-Gummischicht (2') eine Innenfläche des Keilriemens im Gebrauch bildet, einer über der Oberfläche der Haft-Gummischicht (3') angeordneten Gewebeabdeckung (5), und langgestreckten Zugteilen (6') mit einer hohen thermischen Schrumpfspannung, die sich in einer im wesentlichen zueinander parallelen, abstandsgleichen Anordnung längs des Keilriemens erstrecken, dadurch gekennzeichnet, daß die langgestreckten Zugteile (6') zwischen der Haft-Gummischicht (3') und den daran angeordneten Rippen (4') eingebettet sind und Teile der Gewebeabdeckung (5) berühren, welche in Nuten zwischen den Rippen (4') angeordnet sind.

2. Keilriemen nach Anspruch 1, in welchem die Rippen (4') auf der Haft-Gummischicht (3') mit Abständen $p$ entlang dem Keilriemen angeordnet sind und je eine Höhe $t$ aufweisen, wobei die Werte von $p$ und $t$ zur Gesamtdicke $d$ des Keilriemens in folgender Beziehung stehen:

$$1,5t<p<3,5t$$
$$0,12d<t<0,4d$$

3. Keilriemen nach Anspruch 1 oder 2, in welchem die langgestreckten Zugteile (6') eine differentielle thermische Schrumpfspannung zwischen 100°C und 20°C von wenigstens 3,5 g/denier aufweisen.

4. Keilriemen nach Anspruch 1, 2 oder 3, in welchem die langgestreckten Zugteile (6') aus Polyester oder Polyamidfasern hergestellt sind.

5. Keilriemen nach einem vorhergehenden Anspruch, in welchem kurze Fasern (8') in der Kompressions-Gummischicht (2') eingebettet und quer zum Keilriemen orientiert sind.

6. Keilriemen nach Anspruch 5, in welchem die kurzen Fasern (8') in der Kompressions-Gummischicht (2') in einer Menge von 10 bis 30 Gewichtsprozenten vorliegen.

7. Keilriemen nach einem vorhergehenden Anspruch, in welchem die Gewebeabdeckung (5) längs des Keilriemens dehnbar ist.

8. Keilriemen nach Anspruch 7, in welchem die Gewebeabdeckung (5) aus gekräuselten Nylon-Kettfäden (5a) besteht, die einer Kräusel-Behandlung unterworfen wurden und mit gewöhnlichen Nylon-Schußfäden (5b) zusammengewoben sind, wobei die Kettfäden (5a) sich längs des Keilriemens erstrecken.

9. Keilriemen nach einem vorhergehenden Anspruch, in welchem die Shore-Härte der Haft-Gummischicht (3') 60° bis 80° beträgt.

10. Keilriemen nach einem vorhergehenden Anspruch, in welchem die Kompressions-Gummischicht (2') aus einem hitzebeständigen oder aus einem kältebeständigen Gummi hergestellt ist.

11. Keilriemen nach einem vorhergehenden Anspruch, in welchem die Rippen (9) an der Kompressions-Gummischicht (2') mit Abständen $p'$ entlang dem Keilriemen angeordnet sind und je eine Höhe $t'$ aufweisen, wobei die Werte von $p'$ und $t'$ zur Gesamtdicke $d$ des Keilriemens in folgender Beziehung stehen:

$$1,5t' < p' 3,5t'$$
$$0,25d < t' < 0,5d$$

12. Keilriemen nach einem vorhergehenden Anspruch, in welchem die Rippen (9) an der Kompressions-Gummischicht (2') mit im wesentlichen gleichmäßigen Abständen entlang dem Keilriemen angeordnet sind.

13. Keilriemen nach einem der Ansprüche 1 bis 11, in welchem die Rippen (9) an der kompressions-Gummischicht (2') mit Zufalls-Abständen entlang dem Keilriemen angeordnet sind.

14. Keilriemen nach einem vorhergehenden Anspruch, in welchem die Rippen (9) an der Kompressions-Gummischicht (2') von wenigstens einer damit verbundenen Lage gummierten Gewebes (7') bedeckt sind.

15. Keilriemen nach Anspruch 14, in welchem das gummierte Gewebe (7') ein schräg verlaufendes Gewebe ist.

16. Keilriemen nach Anspruch 14, in welchem das gummierte Gewebe (7') ein dehnbares Gewebe ist, welches aus gekräuselten Nylon-Kettfäden besteht, die einer Kräusel-Behandlung unterworfen wurden und mit gewöhnlichen Nylon-Schußfäden zusammengewoben sind.

17. Verfahren zur Herstellung eines selbsteinstellenden Keilriemens nach einem vorhergehenden Anspruch, darin bestehend, daß ein Riemenrohling geformt wird durch nacheinanderfolgendes Wickeln einer Haft-Gummischicht (3a'), eines spiralig gewundenen langgestreckten Zuggliedes (6') und einer Kompressions-Gummischicht (2a') um eine mit Zähnen versehene Außenwand einer zylindrischen Form (11), durch Aufsetzen einer hohlen zylindrischen Form (12) mit einer Zähne aufweisenden Innenwand auf den Riemenrohling, und durch Erhitzen und unter Druck Setzen des Riemenrohlings, um dessen Bestandteile miteinander zu verbinden und zu bewirken, daß Teile der Haft- und der Kompressions-Gummischicht (3a', 2a') in die jeweiligen Zwischenräume (13, 16) zwischen den Zähnen (15, 14) an den Formwänden fließen und dabie die Rippen (4', 9) in dem fertigen Riemen ausbilden, dadurch gekennzeichnet, daß vor den Wickeln der Haft-Gummischicht (3a') eine Gewebeabdeckung (5) um die Außenwand der zylindrischen Form (11) gewickelt und das langgestreckte Zugglied (6') direkt auf die Gewebeabdeckung (5) gewunden wird, so daß es mit Teilen der Gewebeabdeckung in Berührung ist, die von den Zähnen (15) der Wand unterstützt sind, wobei die Gewebeabdeckung (5) in Umfangsrichtung der zylindrischen Form (11) dehnbar ist, um so zu ermöglichen, daß ein Teil der Haft-Gummischicht (3a') während des Vorgangs des Erhitzens und des unter Druck Setzens zwischen die Windungen des Zuggliedes (6') fließt und die Gewebeabdeckung (5) in die Zwischenräume (13) zwischen den Zähnen (15) ausdehnt.

18. Verfahren nach Anspruch 17, gemäß welchem vor dem Vorgang des unter Druck Setzens und des Erhitzens wenigstens eine Lage gummierten Gewebes (7') um die Kompressions-Gummischicht (2a') gewunden wird, wobei des gummierte Gewebe (7') in Umfangsrichtung der hohlen zylindrischen Form (12) dehnbar ist, um so zu ermöglichen, daß während des Vorgangs des unter Druck Setzens und Erhitzens ein Teil der Kompressions-Gummischicht (2a') in die Zwischenräume (16) fließt und dabei das gummierte Gewebe (7') streckt.

19. Verfahren nach Anspruch 17 oder 18, gemäß welchem die Zähne (14) mit Abständen $w'$ entlang dem Umfang der hohlen zylindrischen Form (12) angeordnet sind und je eine Höhe $h'$ aufweisen, wobei die Werte von $w'$ und $h'$ zur Gesamtdicke $d$ des fertigen Keilriemens in folgender Beziehung stehen:

$$1,5h' < w' < 3,5h'$$
$$0,25d < h' < 0,5d$$

20. Verfahren nach Anspruch 17, 18 oder 19, gemäß welchem die Zähne (15) mit Abständen $w$ entlang dem Umfang der ersterwähnten zylindrischen Form (11) angeordnet sind und je eine Höhe $h$ aufweisen, wobei die Werte von $w$ und $h$ zur Gesamtdicke $d$ des fertigen Keilriemens in folgender Beziehung stehen:

$$1,5h < w < 3,5h$$
$$0,12d < h < 0,4d$$

21. Verfahren nach einem der Ansprüche 17 bis 20, gemäß welchem die Spannung des langgestreckten Zuggliedes (6') nach dem Aufwickeln das 1,5 fache bis 3,5 fache seiner normalen Spannung beträgt, welche 0,2 bis 0,6 g/denier ist.

0018456

FIG. 1
PRIOR ART

FIG. 2
PRIOR ART

FIG. 3
PRIOR ART

FIG. 4
PRIOR ART

FIG. 5
PRIOR ART

FIG. 6

FIG. 7

FIG. 8

FIG. 9

FIG. 10

0018456

## FIG. 11

## FIG. 12

## FIG. 13

## FIG. 14

## FIG. 15

3